# EUROPÄISCHE PATENTSCHRIFT

(11) **EP 0 324 101 B1**
(45) Veröffentlichungstag und Bekanntmachung des Hinweises auf die Patenterteilung: **10.03.1993**
(21) Anmeldenummer: 88120304.6
(22) Anmeldetag: 05.12.1988
(51) Int. Cl.: A61G 5/04

(54) **Elektrorollstuhl**
Electric wheelchair
Fauteuil roulant électrique

(30) Priorität: 12.01.1988 DE 3800649; 21.09.1988 DE 3832125
(43) Veröffentlichungstag der Anmeldung: 19.07.1989
(73) Patentinhaber: ORTOPEDIA GMBH, 24149 Kiel (DE)
(72) Erfinder: Linse, Ewald, Dipl.-Ing., D-2305 Heikendorf (DE); Simmat, Dieter, D-2300 Kiel 14 (DE); Körber, Hans, D-2300 Kiel 14 (DE); Köster, Reinhard, D-2300 Kiel-Schilksee (DE)
(74) Vertreter: Henkel, Feiler, Hänzel & Partner

(56) Entgegenhaltungen:
- AT-B- 4 021
- DE-A- 1 942 327
- DE-A- 2 906 372

## Beschreibung

Die Erfindung betrifft einen Elektrorollstuhl mit einem Fahrgestell, das an einer ersten Achsengruppe große Antriebsräder und an einer zweiten Achsengruppe kleinere Schwenkräder aufweist, ferner mit einer Sitzgruppe, einer Antriebseinheit für die Antriebsräder und mit einer Bedieneinheit zur Steuerung der Antriebseinheit. Bei Elektrorollstühlen dieser Art dienen die großen Antriebsräder üblicherweise nicht nur zum Antrieb, sondern auch zur Lenkung, da die Richtung über die Drehzahldifferenz der Antriebsräder bestimmt wird.

Rollstühle dienen allgemein zur Verbesserung der Mobilität von Menschen, die ihre Gehfähigkeit bzw. andere Körperfunktionen verloren haben. Je nach Grad der Behinderung kommen verschiedene Systeme und Konstruktionen von Rollstühlen zum Einsatz. Bei starker Einschränkung einer oder mehrerer Körperfunktionen wird allgemein die Benutzung eines fremdgetriebenen Rollstuhls, im allgemeinen eines Elektrorollstuhls, notwendig. Um die Mobilität eines Behinderten bei Benutzung eines Elektrorollstuhles so groß wie möglich zu gestalten, muß dieser Bedingungen erfüllen, die je nach Benutzungsart und Benutzungsort widersprüchlich sein können.

Für den Einsatz eines Elektrorollstuhles innerhalb geschlossener Räume - dies ist in der Regel der Hauptanteil der Benutzung - ist eine maximale Wendigkeit des Stuhles bei einfacher Handhabung und möglichst kleinem Gewicht wünschenswert. Wird der gleiche Rollstuhl außerhalb geschlossener Räume bei anderer Beschaffenheit, größeren Entfernungen usw. benutzt, so werden an diesen Rollstuhl andere Anforderungen gestellt, z.B. hinsichtlich einer guten Reaktion, eines guten Geradeauslaufs, einer leichten Hindernisüberwindung, einer guten Stoßdämpfung usw.

Diese verschiedenen Anforderungen führten in der Vergangenheit auch zu verschiedenen Rollstuhlkonzepten, die grob in zwei Klassen gegliedert werden können:
1. Elektrorollstühle für den Innenbereich:
   Dies sind allgemein Rollstühle mit kleinen Schwenkrädern vorne und großen Antriebsrädern hinten, wobei die Schwenkräder in der Regel keine Hilfslenkung besitzen. Die Richtungsänderung des Elektrorollstuhles erfolgt allein über die Drehzahldifferenz der beiden Antriebsräder.
2. Elektrorollstühle für den Außenbereich:
   Dies sind allgemein Elektrorollstühle mit großen Antriebsrädern vorne zum Zweck einer einfachen Hindernisüberwindung und mit Schwenkrädern oder Lenkrädern hinten, wobei diese Lenkräder häufig mit einer Zwangslenkung versehen sind. Dabei sind die Zwangslenkung und die Differenz der Drehzahlen der Antriebsräder meist aufeinander abgestimmt.

Diese herkömmlichen, jeweils für einen bestimmten Anwendungsbereich konzipierten Rollstühle sind für den jeweils anderen Bereich nur bedingt brauchbar. So ist z. B. ein für den Außenbereich konstruierter Rollstuhl mit Zwangslenkung der Schwenkräder über ein mechanisches Lenktrapez im Innenbereich ungünstig, da die Zwangslenkung nur einen begrenzten Schwenkwinkel zuläßt. Für den Innenbereich konstruierte Rollstühle mit frei schwenkbaren Lenkrädern sind andererseits im Außenbereich ungünstig, da die zwei schwenkbaren Räder zu einer gewissen Instabilität der Fahrtrichtung führt. So wären für einen Behinderten jeweils immer zwei Rollstühle notwendig, was aus finanziellen und räumlichen Gründen meist nicht möglich ist.

Aus der DE-A-1 942 327 ist ein Krankenfahrstuhl bekannt, der zwei rückwärtige Lenkräder aufweist, die jeweils um eine senkrechte Achse zur Lenkung schwenkbar und mit einer lösbar verbundenen und motorisch angetriebenen Lenkeinrichtung ausgestattet sind. Die Verbindung zwischen der Lenkeinrichtung und dem Lenkrad ist durch eine Feststelleinrichtung in Form einer Steckverbindung dargestellt. Hierbei werden eine mit der Lenkeinrichtung verbundene Antriebswelle und eine mit einem Gabelkopf verbundene Zapfwelle durch eine Schraube, einen Zapfen, einen Rastbolzen o.dgl. verdrehungsfest miteinander verbunden. In diesem Zustand kann das Lenkrad mittels der Lenkeinrichtung gelenkt werden. Wird die Schraube, der Zapfen oder der Rastbolzen gelöst, so kann das Lenkrad unabhängig von der Lenkeinrichtung um seine senkrechte Achse gedreht bzw. geschwenkt werden.

Der bekannte Krankenrollstuhl kann somit in zwei Betriebsarten eingesetzt werden. Um von der einen Betriebsart in die andere wechseln zu können, müssen jedoch an diesem Krankenfahrstuhl Manipulationen vorgenommen werden, welche eine Person, die an einen Rollstuhl gebunden ist, aus eigener Kraft nicht vornehmen kann. Sie ist somit zum Wechsel der Betriebsart auf eine weitere Hilfsperson angewiesen.

Der Erfindung liegt daher die Aufgabe zugrunde, einen gattungsgemäßen Elektrorollstuhl so zu verbessern, daß er sowohl für den Innenbereich als auch für den Außenbereich mit Vorteil verwendbar ist und ein Wechsel zwischen den verschiedenen Anforderungen in gleicher Weise gerecht werdenden Betriebsarten durch die im Rollstuhl sitzende Person vornehmbar ist.

Diese Aufgabe wird bei einem gattungsgemäßen Elektrorollstuhl durch die kennzeichnenden Merkmale des Patentanspruchs 1 gelöst.

Durch die erfindungsgemäß vorgesehene wahlweise Zuschaltung eines Lenkantriebs zu den Schwenkrädern können nach Bedarf sowohl die Vorteile der freien Verschwenkbarkeit als auch diejenigen der Zwangslenkung ausgenutzt werden. Da die Schwenkräder je nach Bedarf zweckmäßigerweise vorne oder hinten betrieben werden, ist die Sitzgruppe zweckmäßigerweise ebenfalls schwenkbar ausgebildet, so daß sie je nach Ausrichtung der Antriebsräder und der Schwenkräder jeweils in die Fahrtrichtung drehbar ist.

Die zuschaltbare Zwangslenkung wird zweckmäßigerweise auf die Drehzahldifferenz der Antriebsräder abgestimmt. Außerdem kann vorgesehen werden, daß der Lenkantrieb entweder manuell oder automatisch in Abhängigkeit von der Rollstuhlgeschwindigkeit zuschaltbar ist.

Besondere Ausgestaltungen und Weiterbildungen der Erfindung sind in den Unteransprüchen angegeben.

Nachfolgend wird die Erfindung an Ausführungsbeispielen näher erläutert. Diese Ausführungsbeispiele beziehen sich auf einen Kombinations-Elektrorollstuhl, bei dem die Sitzgruppe je nach Bedarf, ob die Antriebsräder vorne oder hinten gewünscht werden, um 180^{o} geschwenkt werden kann. Der Rollstuhl kann jedoch bezüglich der Sitzgruppe und der sonstigen Konstruktion auch anders aufgebaut sein.

Es zeigen:
- Fig. 1: einen Kombinations-Elektrorollstuhl in Seitenansicht;
- Fig. 2: eine Schwenkräder-Baugruppe schematisiert in Vorderansicht;
- Fig. 3: eine abgewandelte Schwenkräder-Baugruppe in Draufsicht;
- Fig. 4: ein vereinfachtes Funktionsprinzip einer Zwangslenkung mit einem gemeinsamen Lenkantrieb für beide Schwenkräder mit einer mechanischen Spurkreiseinstellung;
- Fig. 5: ein vereinfachtes Funktionsprinzip einer Zwangslenkung mit einem Lenkantrieb für nur eines der Schwenkräder;
- Fig. 6: ein vereinfachtes Funktionsprinzip einer Zwangslenkung mit je einem eigenen Lenkantrieb für jedes Schwenkrad.

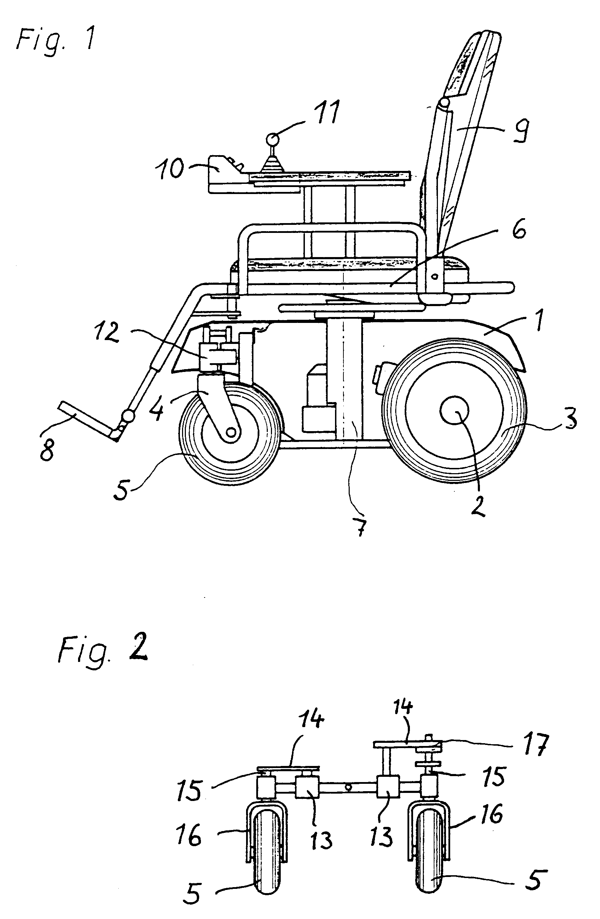

Die Fig. 1 zeigt in Seitenansicht einen Kombinations-Elektrorollstuhl. Ein Fahrgestell 1 besitzt an einer Achse 2 gelagerte große Antriebsräder 3 sowie über Radgabeln 4 verstellbar gehaltene Schwenkräder 5. Eine Sitzgruppe 6 ist über eine zentrale Säule 7 drehbar auf dem Fahrgestell 1 gelagert. Die Sitzgruppe besitzt in üblicher Weise Fußstützen 8 und eine Rückenlehne 9 sowie eine seitlich angeordnete Bedieneinheit 10 mit einem Steuerhebel 11. Durch Auslenken des Steuerhebels 11 aus der Nullposition nach vorn oder zurück wird dem Antrieb ein zur gewünschten Geschwindigkeit proportionales Signal vorgegeben; der Elektrorollstuhl antwortet mit einer entsprechenden Fahrgeschwindigkeit vorwärts oder rückwärts. Durch seitliches Schwenken des Steuerhebels 11 nach links oder rechts bekommt der Elektrorollstuhl eine entsprechend gewünschte Richtungsänderung vorgegeben.

Wie einleitend erwähnt, ist bei dem in Fig. 1 dargestellten Rollstuhl die Sitzgruppe 6 auf dem Fahrgestell 1 schwenkbar gelagert. In der gezeigten Position liegt die Rückenlehne 9 über den Antriebsrädern 3, während die Fußstützen 8 über den Schwenkrädern 5 angeordnet sind. Die Antriebsräder sind also in Sitzrichtung bzw. in Fahrtrichtung hinten angeordnet. Diese Anordnung ist für den Innenbereich durch die große Wendigkeit des Elektrorollstuhles besonders günstig. Wird die Sitzgruppe um 180° geschwenkt, so befinden sich die Rückenlehnen 9 über den Schwenkrädern 5 und die Fußstützen 8 über den Antriebsrädern 3. Die Antriebsräder liegen dann also in Fahrtrichtung vorne. Diese Betriebsart hat besondere Vorteile im Außenbereich, da durch die großen Fronträder größere Hindernisse leichter zu überwinden sind. Für beide Betriebsarten des Kombinations-Elektrorollstuhles oder bei fest montierter Sitzgruppe für jeden Rollstuhl gilt, daß die Richtungsänderungen durch unterschiedliche Drehzahlen der Antriebsräder 3 herbeigeführt werden, während sich die Schwenkräder 5 aufgrund der Rollreibung am Boden und dem Nachlauf auf die von den Antriebsrädern 3 bestimmte Richtung einstellen.

Für den erfindungsgemäßen Elektrorollstuhl sind diese Schwenkräder 5 durch einen zuschaltbaren Lenkantrieb 12 zwangsweise lenkbar, also in Lenkräder umzuwandeln. Die Fig. 2 bis 5 geben weiteren Aufschluß über verschiedene Ausführungsformen dieses zuschaltbaren Lenkantriebs.

Wie in Fig. 2 gezeigt ist, kann jedes der beiden Schwenkräder über einen eigenen Lenkantrieb 13 verfügen, wobei ein beliebig geartetes Übertragungselement, z.B. je ein Zahnriemen 14, die Drehbewegung des Lenkantriebes auf die Achse 15 der Radgabeln 16 überträgt. An dem in Fig. 2 rechts skizzierten Rad 5 ist gezeigt, wie in einer besonderen Ausführungsform der Lenkantrieb 13 mit der Achse 15 über eine - schematisch angedeutete - Kupplung 17 verbunden ist. Wird die Kupplung 17 gelöst, so kann das Schwenkrad 5 frei schwenken. Die freie Schwenkbarkeit der Räder gibt dem Elektrorollstuhl eine große Wendigkeit; er kann also praktisch auf der Stelle gedreht werden. Durch die Instabilität des Fahrzeuges mit frei schwenkbaren Schwenkrädern ist diese Betriebsart allerdings auf kleine Geschwindigkeiten zu beschränken, also vorzugsweise nur im Innenbereich zu wählen.

Um die Sicherheit des Elektrorollstuhles im weiten Geschwindigkeitsbereich zu erhalten, ist eine automatische Zuschaltung der Zwangslenkung bei einer vorgegebenen Fahrgeschwindigkeit möglich.

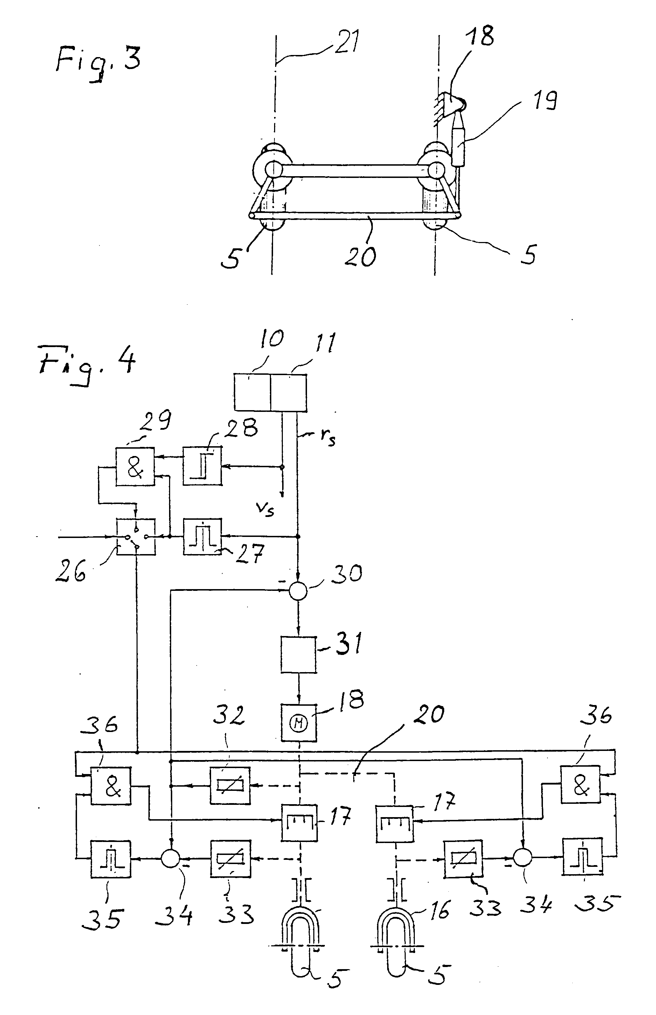

Fig. 3 zeigt das Prinzip einer Zwangslenkung über einen einzigen Lenkantrieb 18 für beide Schwenkräder. Dieser Lenkantrieb 18 ist über eine schematisch gezeigte Aufhängung 19 am Fahrgestell befestigt und wirkt über eine Spurstange 20 auf beide Schwenkräder 5. Da eine solche Zwangslenkung nur einen eingeschränkten Schwenkwinkel zuläßt, ist in diesem Fall eine nicht näher gezeigte Kupplung vorgesehen, die bei Bedarf ausgekuppelt werden kann, um die volle Bewegungsfreiheit der Schwenkräder zurückzuerhalten (bei Verwendung des Rollstuhls im Innenbereich). Zur Inbetriebnahme der Lenkeinheit wird die Stellung der Schwenkräder über ebenfalls nicht dargestellte Positionssensoren überwacht. Ein Einkuppeln der Zwangslenkung ist nur bei richtiger Relativstellung der Schwenkräder und des Lenkantriebs möglich.

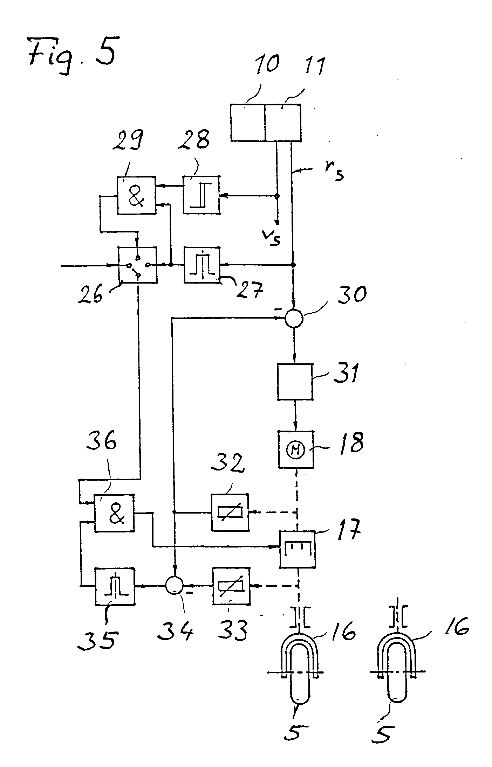

Fig. 4 zeigt das Funktionsprinzip einer Zwangslenkung mit einem Lenkantrieb 18 entsprechend Fig. 3. Die Spurkreisvorgabe der Schwenkräder wird über ein mechanisches Lenktrapez erreicht, wobei die Verbindung der beiden Schwenkräder über eine andeutungsweise gezeigte Spurstange 20 erfolgt.

Die Richtungsvorgabe erfolgt über das Bediengerät 10 mit dem Steuerhebel 11. Über die Schalteinheit 26 ist das Zuschalten der Zwangslenkung über die Kupplungen 17 wählbar. Je nach Stellung des Schalters in der Schalteinheit 26 erfolgt dieses Zuschalten manuell (linke Stellung) oder automatisch innerhalb eines zulässigen Schwenkbereiches und/oder in Abhängigkeit von der Stuhlgeschwindigkeit. Im gezeigten Beispiel wird die am Bediengerät 10 eingestellte Geschwindigkeit vₛ dem Geschwindigkeits-Schwellwertgeber 28 und die eingestellte Richtung rₛ an die Richtungs-Bereichsvorgabe 27 gegeben. In diesen Einrichtungen 27 und 28 wird innerhalb eines bestimmten Richtungsbereiches bzw. bei Überschreiten einer vorgegebenen Geschwindigkeit ein Signal erzeugt und entweder an die Schalteinrichtung 26 direkt oder über eine UND-Verknüpfung 29 an diese Schalteinrichtung 26 gegeben. Über eine Vergleichsstelle 30 wird entsprechend der Stellung des Steuerhebels 11 ein Richtungssignal zur Festlegung eines bestimmten Spurkreises an das Stellglied 31 gegeben. Dadurch werden über den Lenkantrieb 18 die Schwenkräder 5 bei eingeschalteten Kupplungen in die vorgegebene Position gedreht.

Über eine Positionsmeßeinrichtung wird die Winkelstellung überwacht. Dabei wird die Stellung des Lenkantriebes mit einem Sensor 32 und die Stellung der Schwenkräder mit den Sensoren 33 überwacht. Über die Vergleichseinheiten 34 und die Kontrolleinheiten 35 wird die Relativstellung zwischen der Lenkeinheit und den Schwenkrädern kontrolliert. Das Ausgangssignal dieser Kontrolleinheiten 35 wird jeweils zusammen mit dem Signal von der Schalteinheit 26 einer UND-Verknüpfung 36 zugeführt. Bei Anliegen beider Signale werden die jeweiligen Kupplungen 17 betätigt, also die Schwenkräder 5 mit dem Lenkantrieb 18 verbunden. Von dem Sensor 32 wird die Position des Lenkantriebs an die Vergleichsstelle 30 zurückgemeldet, und bei Abweichungen wird über das Stellglied 31 und den Lenkantrieb 18 nachgeregelt.

Fig. 5 zeigt ein vergleichbares Funktionsprinzip einer Zwangslenkung mit einem Lenkantrieb 18, der nur auf ein Schwenkrad 5 einwirkt. Das zweite Rad 5 ist dabei frei schwenkbar und wird nicht zur Zwangslenkung herangezogen. Das Funktionsprinzip entspricht ansonsten dem zu Fig. 4, wobei lediglich die mechanische Verbindung zum zweiten Schwenkrad 5 fehlt und entsprechend auch die Kupplung 17 sowie die Positionsmeßeinrichtung 32 bzw. 33 nur für das zwangsgelenkte Schwenkrad 5 vorgesehen sind.

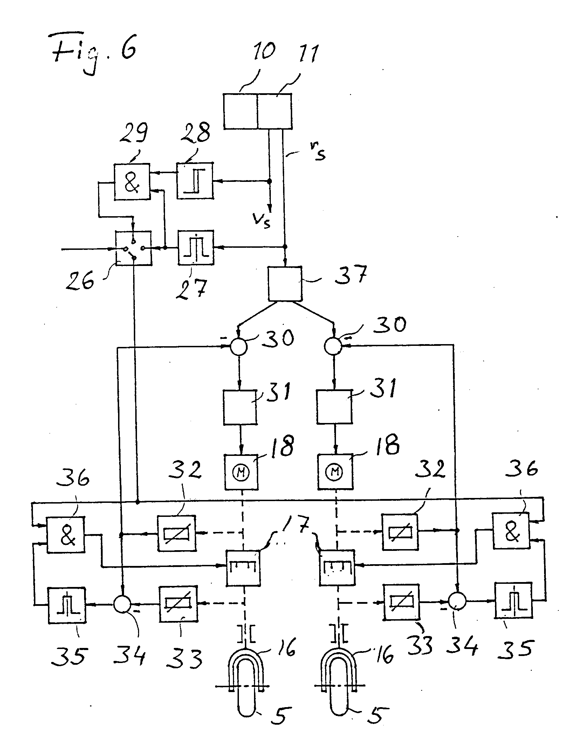

Eine weitere Abwandlung des gleichen Funktionsprinzips ist in Fig. 6 dargestellt. Dort ist eine Zwangslenkung mit je einem eigenen Lenkantrieb 18 für jedes Schwenkrad 5 gezeigt. Die Spurkreisvorgabe der Schwenkräder erfolgt über den jeweiligen Lenkantrieb 18, wobei ein Lenkwinkelrechner 37 die Steuerung für beide Lenkantriebe übernimmt. Die Funktion der einzelnen Elemente entspricht ansonsten der Beschreibung zu Fig. 4. In Ergänzung zu Fig. 4 sind hier neben den zwei Lenkantrieben 18 auch getrennte Stellglieder 31 und Vergleichsstellen 30 vorgesehen. Das Einschalten der Zwangslenkung über die Kupplungen 17 erfolgt wie bei Fig. 4. Wird die Zwangslenkung ausgeschaltet, sind beide Räder 5 frei schwenkbar.

## Patentansprüche

1. Elektrorollstuhl mit
einem Fahrgestell (1), das an einer ersten Achsengruppe (2) große Antriebsräder (3) und an einer zweiten Achsengruppe kleinere Schwenkräder (5) aufweist, ferner mit einer Sitzgruppe (6), einer Antriebseinheit für die Antriebsräder (3) und mit einer Bedieneinheit (10) zur Steuerung der Antriebseinheit,
wobei mindestens eines dieser Schwenkräder (5) wahlweise zum Zweck zwangsweiser Lenkbarkeit mit einem Lenkantrieb (18) verbunden werden kann,
dadurch gekennzeichnet,
daß der Lenkantrieb (18) über den Schalter einer Schalteinheit (26) und über einen Kupplungsmechanismus (17) zuschaltbar ist und
daß die Schwenkräder (5) bei nicht zugeschaltetem Lenkantrieb (18) ohne Einschränkung des Schwenkwinkels frei schwenkbar sind.

2. Rollstuhl nach Anspruch 1, dadurch gekennzeichnet, daß mit dem Lenkantrieb (18) nur eines der beiden Schwenkräder (5) lenkbar ist (Fig. 5).

3. Rollstuhl nach Anspruch 1, dadurch gekennzeichnet, daß die beiden Schwenkräder (5) über ein mechanisches Lenkgestänge (20) durch einen gemeinsamen Lenkantrieb (18) lenkbar sind (Fig. 4).

4. Rollstuhl nach Anspruch 1, dadurch gekennzeichnet, daß jedes der Schwenkräder (5) über einen eigenen Lenkantrieb (18) lenkbar ist (Fig. 6).

5. Rollstuhl nach Anspruch 4, dadurch gekennzeichnet, daß jedes der Schwenkräder (5) über einen Stellmotor positionierbar ist, wobei die Lenkwinkelvorgabe rechnergesteuert erfolgt.

6. Rollstuhl nach einem der Ansprüche 1 bis 5, dadurch gekennzeichnet, daß bei Anschaltung des Lenkantriebs (18) an die Schwenkräder (5) die Lenkung durch die Antriebsräder (3) wahlweise zu- bzw. abschaltbar ist.

7. Rollstuhl nach einem der Ansprüche 1 bis 6, dadurch gekennzeichnet, daß bei Zuschaltung des Lenkantriebs (18) an die Schwenkräder (5) die Mitlenkung durch die Antriebsräder (3) automatisch abgestimmt wird.

8. Rollstuhl nach einem der Ansprüche 1 bis 7, dadurch gekennzeichnet, daß der Lenkantrieb (18) nur bei einem beschränkten Schwenkbereich um die Geradeausstellung zuschaltbar ist.

9. Rollstuhl nach einem der Ansprüche 1 bis 8, dadurch gekennzeichnet, daß der Lenkantrieb (18) jeweils über eine Kupplung (17) von dem Schwenkrad bzw. den Schwenkrädern (5) abtrennbar ist.

10. Rollstuhl nach Anspruch 9, dadurch gekennzeichnet, daß die Kupplung eine reib- oder formschlüssige Verbindung bildet und insbesondere einen mechanischen, elektrischen, hydraulischen, pneumatischen oder magnetischen Antrieb aufweist.

11. Rollstuhl nach einem der Ansprüche 1 bis 10, dadurch gekennzeichnet, daß die Zuschaltung des Lenkantriebes über eine Winkelpositionsmeßeinrichtung (32, 33) der Schwenkräder (5) überwacht wird.

12. Rollstuhl nach Anspruch 11, dadurch gekennzeichnet, daß die Positionsmeßeinrichtung jeweils einen Sensor (33) aufweist, der die Winkelstellung des zugehörigen Schwenkrades (5) insbesondere mechanisch, optisch, induktiv, kapazitiv oder magnetisch abtastet.

13. Rollstuhl nach einem der Ansprüche 1 bis 12, dadurch gekennzeichnet, daß der Lenkantrieb (18) automatisch zuschaltbar ist.

14. Rollstuhl nach Anspruch 13, dadurch gekennzeichnet, daß der Lenkantrieb (18) in Abhängigkeit von der Geschwindigkeit des Rollstuhles zuschaltbar ist.

15. Rollstuhl nach einem der Ansprüche 1 bis 12, dadurch gekennzeichnet, daß der Lenkantrieb (18) manuell zuschaltbar ist.

16. Rollstuhl nach einem der Ansprüche 11 bis 15, dadurch gekennzeichnet, daß über die Positionsmeßeinrichtung eine Fahrstufenumschaltung betätigbar ist, durch die bei Kurvenfahrt die Maximalgeschwindigkeit herabgesetzt wird.

## Claims

1. An electric wheelchair, comprising:
a chassis (1) having large drive wheels (3) on a first axle group (2), and small swivel wheels (5) on a second axle group, further comprising a seat group (6), a driving unit for the drive wheels (3), and an operating unit (10) for controlling the driving unit;
wherein at least one of said swivel wheels (5) is adapted to be selectively connected to or engaged with steering drive means (18) for the purpose of forced steerability;
characterized in
that the steering drive means (18) is adapted to be connected through the switch of a switching unit (26) and through a clutch mechanism (17); and
that the swivel wheels (5), when the steering drive means (18) is not connected, are adapted to swivel freely without restriction of the swivel angle.

2. The wheelchair according to claim 1, characterized in that only one of said two swivel wheels (5) is steerably by the steering drive means (18) (Fig. 5).

3. The wheelchair according to claim 1, characterized in that said two swivel wheels (5) are adapted to be steered through a mechanical steering linkage (2) by common steering drive means (18) (Fig. 4).

4. The wheelchair according to claim 1, characterized in that each of said swivel wheels (5) is adapted to be steered through associated steering drive means (18) (Fig. 6).

5. The wheelchair according to claim 4, characterized in that each of said swivel wheels (5) is adapted to be positioned through a positioning motor or servomotor, with the swivel angle setting being performed under computer control.

6. The wheelchair according to any one of claims 1 to 5, characterized in that when the steering drive means (18) is connected to or engaged with the swivel wheels (5), steering by the drive wheels (3) is adapted to be selectively connected and disconnected, respectively.

7. The wheelchair according to any one of claims 1 to 6, characterized in that when the steering drive means (18) is connected to or engaged with the swivel wheels (5), co-steering by the drive wheels (3) is automatically matched or coordinated.

8. The wheelchair according to any one of claims 1 to 7, characterized in that said steering drive means (18) is adapted to be connected only with a limited swivel range around the straight-ahead position.

9. The wheelchair according to any one of claims 1 to 8, characterized in that said steering drive means (18) is adapted to be disconnected from the swivel wheel or swivel wheels (5) through a respective clutch (17).

10. The wheelchair according to claim 9, characterized in that said clutch establishes frictional engagement or positive engagement and includes especially a mechanical, electric, hydraulic, pneumatic or magnetic drive mechanism.

11. The wheelchair according to any one of claims 1 to 10, characterized in that connection of said steering drive means is monitored by angular position detection means (32, 33) of said swivel wheels (5).

12. The wheelchair according to claim 11, characterized in that said position detection means comprises a respective sensor (33) which scans or detects the angular position of the associated swivel wheel especially mechanically, optically, inductively, capacitively or magnetically.

13. The wheelchair according to any one of claims 1 to 12, characterized in that said steering drive means (18) is adapted to be automatically connected or engaged.

14. The wheelchair according to claim 13, characterized in that said steering drive means (18) is adapted to be connected or engaged in accordance with the velocity of the wheelchair.

15. The wheelchair according to any one of claims 1 to 12, characterized in that said steering drive means (18) is adapted to be manually connected or engaged.

16. The wheelchair according to any one of claims 11 to 15, characterized in that speed shift means is adapted to be operated by said position detection means, which speed shift means reduces the maximum velocity in cornering.

## Revendications

1. Fauteuil roulant électrique comprenant un châssis (1) qui présente de grandes roues d'entraînement (3) sur un premier groupe-essieu (2) et des roues pivotantes (5) plus petites sur un second groupe-essieu, comprenant en outre un siège (6), une unité d'entraînement pour les roues d'entraînement (3) et une unité de manoeuvre (10) pour commander l'unité d'entraînement, au moins l'une de ces roues pivotantes (5) pouvant être au choix reliée à un entraînement de braquage (18) en vue d'un braquage forcé, caractérisé en ce que l'entraînement de braquage (18) peut être mis en fonction par le commutateur d'une unité de commutation (26) et par un mécanisme d'accouplement (17) et que les roues pivotantes (5) peuvent pivoter librement sans limitation de l'angle de pivotement lorsque l'entraînement de braquage (18) n'est pas en fonction.

2. Fauteuil roulant selon la revendication 1, caractérisé en ce que seule l'une des deux roues pivotantes (5) peut être braquée par l'entraînement de braquage (18) (figure 5).

3. Fauteuil roulant selon la revendication 1, caractérisé en ce que les deux roues pivotantes (5) peuvent être braquées par un entraînement commun de braquage (18), par l'intermédiaire d'une tringlerie mécanique de direction (20) (figure 4).

4. Fauteuil roulant selon la revendication 1, caractérisé en ce que chacune des roues pivotantes (5) peut être braquée par l'intermédiaire d'un propre entraînement de braquage (18) (figure 6).

5. Fauteuil roulant selon la revendication 4, caractérisé en ce que chacune des roues pivotantes (5) peut être positionnée par l'intermédiaire d'un servomoteur, la prédétermination de l'angle de braquage étant assurée par commande par ordinateur.

6. Fauteuil roulant selon l'une des revendications 1 à 5, caractérisé en ce que, lorsque l'entraînement de braquage (18) est accouplé aux roues pivotantes (5), le braquage par l'intermédiaire des roues d'entraînement (5) peut, au choix, être mis en fonction ou hors fonction.

7. Fauteuil roulant selon l'une des revendications 1 à 6, caractérisé en ce que le braquage conjoint par l'intermédiaire des roues d'entraînement (3) est automatiquement synchronisé lorsque l'entraînement de braquage (18) est mis en fonction pour les roues pivotantes (5).

8. Fauteuil roulant selon l'une des revendications 1 à 7, caractérisé en ce que l'entraînement de braquage (18) ne peut être mis en fonction qu'en présence d'une plage de pivotement limitée autour de la position de trajectoire rectiligne.

9. Fauteuil roulant selon l'une des revendications 1 à 8, caractérisé en ce que l'entraînement de braquage (18) peut être séparé de la roue pivotante ou des roues pivotantes (5) par l'intermédiaire d'un accouplement (17).

10. Fauteuil roulant selon la revendication 9, caractérisé en ce que l'accouplement établit une liaison par frottement ou par complémentarité de formes et présente en particulier un entraînement mécanique, électrique, hydraulique, pneumatique ou magnétique.

11. Fauteuil roulant selon l'une des revendications 1 à 10, caractérisé en ce que la mise en fonction de l'entraînement de braquage est surveillée par un dispositif de mesure de positions angulaires (32, 33) des roues pivotantes (5).

12. Fauteuil roulant selon la revendication 11, caractérisé en ce que le dispositif de mesure de positions présente un capteur (33) qui détecte la position angulaire de la roue pivotante associée (5), en particulier mécaniquement, optiquement, inductivement, capacitivement ou magnétiquement.

13. Fauteuil roulant selon l'une des revendications 1 à 12, caractérisé en ce que l'entraînement de braquage (18) peut être mis en fonction automatiquement.

14. Fauteuil roulant selon la revendication 13, caractérisé en ce que l'entraînement de braquage (18) peut être mis en fonction en dépendance de la vitesse du fauteuil roulant.

15. Fauteuil roulant selon l'une des revendications 1 à 12, caractérisé en ce que l'entraînement de braquage (18) peut être mis en fonction manuellement.

16. Fauteuil roulant selon l'une des revendications 11 à 15, caractérisé en ce qu'une commutation des paliers de marche, actionnable par l'intermédiaire du dispositif de mesure de positions, a pour effet de réduire la vitesse maximale lors d'un déplacement en courbe.
